# EUROPEAN PATENT APPLICATION

(11) **EP 4 152 231 A1**
(43) Date of publication of application: **22.03.2023**
(21) Application number: 21211432.6
(22) Date of filing: 30.11.2021
(51) Int. Cl.: G06Q 10/10, G06Q 40/00, G06Q 40/02

(54) **DYNAMICALLY UPDATING ACCOUNT ACCESS BASED ON EMPLOYMENT DATA**

(30) Priority: 16.09.2021 US 202163244996 P; 01.10.2021 US 202117492160
(71) Applicant: Rain Technologies Inc., Venice, California 90291 (US)
(72) Inventor: BRADFORD, Alexander, Venice, 90291 (US)
(74) Representative: Jarrett, Daniel Phillip

(57) **Abstract**

A computer based method generating data for a dynamic credit instrument is disclosed. In one embodiment, the method includes determining, with a processing element associated with one of an employment data server or an account server, employment data based to the work of a user. The processing element determines an earned income based on the employment data. The processing element determines a draw limit of an account that receives the earned income. The draw limit is determined during an interval before a payment to the account for the earned income. The method includes dynamically determining, based on a difference between the draw limit and an outstanding draw balance from the account, an amount of funds available and generating, the dynamic credit instrument. The dynamic credit instrument includes data used to regulate access thereto. The method provides, via a user device, withdrawal of the funds up to the draw limit.

## Description

### CROSS-REFERENCE TO RELATED APPLICATIONS

This application claims the benefit of priority pursuant to 35 U.S.C. § 119(e) of U.S. provisional patent application no. 63/244,996, filed 16 September 2021, entitled "Dynamically Updating Account Access Based on Employment Data," which is hereby incorporated by reference herein in its entirety.

### BACKGROUND

Current systems and methods to manage payments such as salary, wages, or other earned income to employees or other workers have a number of limitations. For example, in a typical system a worker is paid by an employer in arrears. In other words, a worker may work for a period of time such as a week, two weeks, a month, or more before being paid (e.g., by a paycheck, direct deposit transfer, or the like) by an employer on a regular payday. In this traditional model, the user has expended work but has not yet been able to realize the benefit (e.g., compensation) of that work. However, people may often need funds between these regular pay periods and often have to turn to options, such as predatory pay day lenders, that charge high fees for such loans. These loans are difficult to administer and can be high risk to the user, further adding fees and uncertainty. In many instances, a person can become trapped in a cycle of high interest payday loans. There is a need for better solutions which, through the use of technology, can be more streamlined, transparent, and less risky to provide better options for people to be paid between regular or irregular pay periods.

### BRIEF SUMMARY

Aspects and features of the present disclosure are set out in the appended claims.

### OVERVIEW OF DISCLOSURE

A computer based (or "computer implemented") method for generating data for a dynamic credit instrument is disclosed. In one embodiment, the method includes determining, with a processing element, employment data based on work of a user; determining, with the processing element, an earned income based on the employment data; and determining, with the processing element, a draw limit of an account configured to receive the earned income. The draw limit is determined during an interval before a payment to the account for the earned income by an employer. The method includes dynamically updating, with the processing element, the draw limit based on the earned income; dynamically determining with the processing element, based on a difference between the draw limit and an outstanding draw balance from the account, an amount of funds available. The method further includes generating, with the processing element, the dynamic credit instrument. The dynamic credit instrument includes data used to regulate access to the dynamic credit instrument. The method includes transmitting for display on a user device a user interface identifying the draw limit and the amount of funds available.

A computer based method generating data for a dynamic credit instrument is disclosed. In one embodiment, the method includes determining, with a processing element associated with one of an employment data server or an account server, employment data based to the work of a user. The processing element determines an earned income based on the employment data. The processing element determines a draw limit of an account that receives the earned income. The draw limit is determined during an interval before a payment to the account for the earned income. The method includes dynamically determining, based on a difference between the draw limit and an outstanding draw balance from the account, an amount of funds available and generating, the dynamic credit instrument. The dynamic credit instrument includes data used to regulate access thereto. The method provides, via a user device, withdrawal of the funds up to the draw limit.

A system for generating a dynamic credit instrument is disclosed. In one embodiment, the system includes a server hosting a user account configured to record one or more ledger entries. A first ledger entry is indicative of an earned income and second ledger entry is indicative of a draw limit; and a processing element operative to adjust the ledger entries of the user account, wherein the processing element: receives from a server employment data related the user; determines the earned income based on the employment data; determines a draw limit of the user account, wherein the draw limit is determined during an interval before a payment to the user account; and generates the dynamic credit instrument. The dynamic credit instrument includes the draw limit. The processing element dynamically updates the dynamic credit instrument with the draw limit based on the earned income; and presents on a display screen, account information corresponding to the user account, wherein the account information includes a funds available based on the draw limit.

A computer-readable medium is disclosed. The computer-readable medium comprises instructions which, when executed by a processing element of a computing device, cause the computing device to perform any of the methods described herein.

The methods and systems of the present disclosure have a number of advantages over existing payment systems. As one example, the methods and systems of the present disclosure use technical means to provide a technical solution to the problem of how to improve a user's access to their funds while maintaining confidentiality of the user. The methods and systems allow the user to more readily and quickly (e.g., daily or real time) access funds as they are earned, in a scalable and resource-efficient manner. By updating dynamically, the methods and systems allow the user's access to funds to be adjusted to match the user's earnings with reduced latency.

In one existing payment system, the user assigns their wages to a third party who deducts an outstanding loan balance, if any, from the user's paycheck and the balance of the paycheck is remitted to the user. At least one problem with this system is that it requires the involvement of the employer, making the system difficult to scale. Furthermore, a user may not wish to share with the employer the fact the employer is using a payday loan product. By using the systems and method of the present disclosure, the employer may not be involved (e.g., employment data may be determined from public sources without the need of the employer's involvement). Additionally, the user does not need to assign their wages to a third party who may or may not be trustworthy. Furthermore, the user can attain additional payment flexibility without the knowledge of their employer.

In another existing payment system, the user is paid to an account held by a third party for the benefit of the user. In other words, while the user may retain equitable title to the account, legal title is held by the third party. This system again has several deficiencies overcome by the systems and methods of the present disclosure. For example, using the systems and methods of the present disclosure, the user does not need to agree to receive their income in an account they do not legally own, and the employer does not need to agree to pay the user's income to such an account. The systems and methods of the present disclosure are more transparent than this existing system and do not require a high degree of trust of a third party legal owner of an account to actually pay any balance of income to the user and not to charge hidden fees.

In another existing payment system, a user may write a check to a lender for an amount the user wishes to borrow, plus any fee. The lender gives the user the borrowed amount (or directly deposits the amount in the user's checking account). The lender usually holds the check until the user's next payday and then cashes the check for the loan amount plus fee. The systems and methods of the present disclosure are beneficial over this existing system at least because the disclosed systems scale well and do not rely on the use of paper checks.

### BRIEF DESCRIPTION OF THE SEVERAL VIEWS OF THE DRAWINGS

FIG. 1 illustrates an example of a dynamic account system.
FIG. 2 is a flowchart illustrating an example of a method of configuring a user account of the system of FIG. 1.
FIG. 3 is a flowchart illustrating an example of a method of determining a draw limit of the user account of FIG. 1.
FIG. 4 illustrates an example of a graphical user interface of the dynamic account system of FIG. 1.
FIG. 5 illustrates an example of the devices of the dynamic account system of FIG. 1.

### DETAILED DESCRIPTION

The present disclosure includes data transmission and collecting systems and methods that can enable real time updating of data related to credit and earned income to allow funding options between pay periods. The system utilizes employment data and/or personal data, (e.g., location data, smartphone data, or the like), to dynamically update draw limits for funds in a bank account or funds accessible via a dynamic credit instrument. This system allows users to more readily and quickly (e.g., daily or real time) access funds as they are earned, eliminating the need to resort to unseemly or high cost lenders, such as predatory payday lenders to access emergency funds. For example, the system may determine an earned income value at any given point in time based on, for example, a number of hours worked by a user and pay rate, where the earned income may be verified or directly received from the employer or may be determined from other data sources not related to the employer. Utilizing this information, the system may then determine a draw limit as a percentage of the earned income, where the draw limit is typically determined between pay periods, e.g., within the days between two paydays. The draw limit or access limit may be dynamic, such that, for example, the draw limit may increase as user's earned income increases due a user working more hours or may reduce based on withdrawals or the like.

An account of the system (e.g., a worker account or an employer account) may be a virtual data repository including data corresponding to worker earned income, worker credit risk, cash balance, outstanding credit balance, credit draw limit, employment data and/or supplemental data related to worker credit risk, user identification, debit and/or credit amounts, etc. In some embodiments, the system provides for the transfer of funds from a first account to second account. For example, the system generates data related to a value (e.g., currency amount) of a transfer from the first account, a corresponding increase in the outstanding balance of credit drawn from the first account, a date and time of the transfer, and other related data. The system may transmit data to a system (such as a system of a banking institution) to update a ledger of the first account indicating a debit in the amount of the value of the transfer and an outstanding balance of the account. The system may transmit the data related to the transfer to another banking system that manages the second account to update a ledger of the second account indicating the value of the transfer. Alternately, the system may manage either or both of the first account and the second account and may update the respective ledgers of the directly.

In one example, the system includes, or is linked to a banking account, such as a checking account, that may include a line of credit associated therewith. In embodiments where the system is linked to a banking account, the system may receive data from the banking system associated with the banking account. For example, the system may receive data related to debits, credits, cash balance, outstanding credit balance, authorized users, transfer amounts, etc. The banking account allows a user to access funds in the account, as well as funds not stored in the account, but that may be available via a credit line, e.g., the "available funds" may be larger than funds actually deposited in the account. The credit line typically will define a total amount of credit or borrowed funds the user is able to access, i.e., a credit limit. The credit line also has a limit of the amount of credit the user can have outstanding at any given time, i.e., a draw limit. In many embodiments, the draw limit is less than or equal to the credit limit.

The draw limit is updated dynamically as the user earns income. The draw limit or threshold may be updated based on one or more draw limit characteristics. In some examples, the draw limit characteristics may include actual or projected earned income of a user. The draw limit characteristics may include other data or events associated with a user that may affect the ability of a user to repay funds withdrawn from the line of credit. For example, the draw limit characteristics may include an employment status, employment history, hourly wage, salary, housing history, social data indicative of the strength of a user's social network, and the like. The draw limit may be adjusted as the user performs work, e.g., duties associated with his or her pay. For example when a user completes a shift at a job, the user may have earned an amount of income associated with that shift. The draw limit may increase based on a percentage of that earned income. In some implementations, the draw limit is updated based on actual earned income. In some implementations, the draw limit is based on a predicted value of earned income. For example, the draw limit is updated based on a prediction of earned income based on hours worked and an hourly wage.

The draw limit may be adjusted before the user receives payment for the work performed. For example, the draw limit may be updated on the day the user works even though the user's regular payday may be days or weeks away. Employment data is any data that may relate to income the user has earned, is earning, or may earn in the future. Some examples of employment data include time and attendance data (e.g., timesheet data), geolocation data that correlates a user's location with a location of an employer's place of business, user status in an employer human resources system, etc. For example, the system 100 may use geolocation data to track the user's presence at a place of business of an employer over a period of time and determines the earned income based on the period of time the user is present at the place of business. The employment data may be generated by a physical sensor. As used herein, a physical sensor includes any device that can generate employment data. For example, location data may be generated by a physical sensor such as a global positioning sensor, an employee identification credential such as a radio frequency identification ("RFID") device, an employee timecard system, an occupancy sensor, a point of sale system, a proximity sensor, a camera, an employer computer login credential security system, or the like. The employment data may be used to update the draw limit. For example, the system 100 can utilize the employment data to identify changes in the earned income, which can then be used to update the draw limit. For example, as the user has earned income, the draw limit may be increased.

The draw limit may be increased or otherwise varied in the interval between when the work was completed and the user is paid for the work, e.g., after the user works and earns income and before the user receives a paycheck or direct deposit credit. An advantage of such a system is that the user may gain faster access to the value of his work than with traditional compensation models. Another advantage of such a system is that the lender may limit its credit exposure to the value of the user's work that the user has earned and thus able to pay back to the lender. In this manner, the actual work and revenue associated with such work, can be used by a lender to provide funds to a user, without having to rely on a debt assessment or other types of conventional underwriting typically required for such loans.

As used herein a user is meant to encompass individuals or entities that exchange compensation for work by others, e.g., any individual, partnership, association, corporation, business trust, legal representative, or any organized group of persons that may hire or engage users for work. Additionally, the term user may also encompass those who exchange work for compensation (whether a person or entity), e.g., individuals, partnership, association, corporation, business trust, legal representative, or any organized group of persons who permit or suffer a user to produce work in exchange for earned income. In some implementations, an employer can also be a user (e.g., an employer can use the system 100 to be paid as well as to pay other users).

Additionally, as used herein, earned income or compensation is meant to encompass anything of value exchanged for the work or achievements (e.g., sales) of a user. Earned income may include wages, tips (gratuities), salary, profit sharing, bonuses, commissions on sales, awards, compensation, and/or any other thing of value. In many implementations, the earned income is received as a payment of legal tender (e.g., money, funds, a virtual currency such as bitcoin ethereum, etc.), although other forms of compensation are contemplated as within the scope of this disclosure.

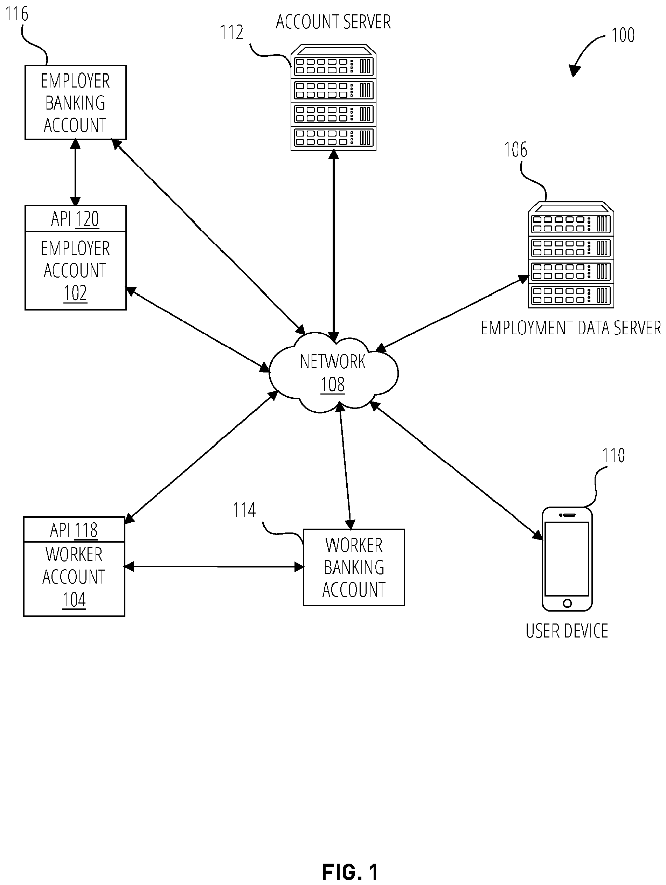

FIG. 1 illustrates an example of a dynamic account system 100. The dynamic account system 100 includes an employer account 102 a user account 104, an employment data server 106, and an account server 112. Either or both of the employer account 102 and/or the user account 104 may be dynamic data repositories as discussed above. The dynamic account system 100 may optionally include a user device 110 associated with a user of the dynamic account system 100 such as a worker.

The employer account 102 may be any type of deposit account held by, or for the benefit of, the employer. The employer account 102 may hold employment data and/or supplemental data related to the employer and/or a worker such as a worker's salary, earned income, tips, work location, length of employment, time and attendance data and other employment and/or supplemental data as described herein. The employer account 102 may be linked to an employer banking account 116 that holds employer assets (e.g., money). The employer banking account 116 may be held at a financial institution such as a bank, credit union, or the like. For example, the system may include an application program interface ("API") 118 that links the employer account 102 with the employer's banking account 116 to enable the transfer of data therebetween. The API 118 translates and transfers data between the employer account 102 and the employer banking account 116. In some embodiments, the employer account 102 may hold employer assets such as cash, deposit credits, stocks, bonds, or other employer property directly, in addition to the above data and the employer banking account 116 may be optional. The employer may receive payments to the employer banking account 116, such as from customers. The employer may transfer something of value (e.g., make payments, extend credit, or the like) from the employer banking account 116 such as to users, vendors, and other holders of employer liabilities. The employer account 102 may receive and process data related to such transfers via the API 118. The employer account 102 and the employer banking account 116 may be in communication with one another directly or via the network 108.

The user account 104 (or worker account 104) is an account owned or accessed by the user. The user account 104 may hold similar data to that held in the employer account 102 and may hold other data as well. The user account 104 may hold employment data, supplemental data, and/or data related to the user's financial transactions. For example the user account 104 may hold data related to the user's earned income, cash balance, spending habits, outstanding credit balance. Similar to the employer account 102, the user account 104 may be linked to a user banking account 114 via an API 120. The API 120 may be the same as the API 118 or may be different. For example, if the employer banking account 116 and the user banking account 114 are held at the same financial institution, the API 118 and API 120 may be the same. In another example, such as when the employer banking account 116 and the user banking account 114 are held at different financial institutions, the API118 and the API 120 may be different. The user banking account 114 holds assets of the user. The user banking account 114 may be held at a bank or other financial institution. The user account 104 and the user banking account 114 may be in communication with one another directly or via the network 108. In some implementations, the user account may be a bank account. In some implementations, the user account 104 may be an interface for interacting with a financial institution. In some implementations, the user account 104 is an electronic record (e.g., a database record in a memory component 512 of the account server 112) that includes one or more accounting ledger entries indicating the value of assets, a credit limit, draw limit, and/or liabilities associated with the user. The ledger entries may be related to, reflect, or be linked with the user banking account 114. For example, as the user makes transfers, withdrawals, deposits, or the like from the user banking account 114, the user account 104 may be updated to reflect such activity values, draw limit, liabilities, etc. The user account 104 may be a checking account, savings account, or the like. Thus, the user account 104 can hold user assets such as cash, deposit credits, stocks, bonds, or other user property. Like the user employer account 102, the user account 104 can be used by the user to receive payments (e.g., compensation from the employer) and/or make payments. For example, the user may use the user account 104 to pay for rent, a mortgage, groceries, or other expenses, as well as access cash (e.g., via automated teller machine (ATM), cash back from a point-of-sale transaction, and/or withdrawal). The user account 104 may include a checking account component (e.g., may include the use of physical drafts or checks). In many implementations, the user account 104 may be a checking account whereby the user can make or receive payments electronically without the use of physical checks, e.g. by electronic deposit. In some implementations, the user account 104 may include the use of any type of dynamic credit instrument, including, but not limited to, physical checks, electronic payments, a debit credential (e.g., a physical debit card or a virtual debit instrument), an installment loan, an investment product including a margin element configured to enable a user to buy assets on margin.

The user account 104 and/or the user banking account includes a regulated credit product and/or dynamic credit instrument, i.e., a dynamically updating credit line, as a feature thereof. The credit product may correspond to data for determining or providing access to assets held in the user banking account 114 and/or the user account 104. The user can withdraw funds from the user account 104 including the user's own assets as well as funds from the credit line. In addition to accounting for one or more deposit records of user assets, the user account 104 can also include records (e.g., ledger entries) of user liabilities in the form of credit withdrawals the user has made from the credit line associated with the user account 104. For example, the user account 104 may include accounting ledger entries that record or track the deposits and withdrawals to the account. Operation of the user account 104 is discussed in greater detail in relation to the methods 200 and 300.

The employment data server 106 and/or the account server 112 control various aspects and components of the dynamic account system 100. The employment data server 106 is any type of computing device or devices that can access, receive, collect, and/or generate employment data related to the user. The employment data server 106 can include a processing element or other computing resource such as a central processing unit (CPU) or a graphics processing unit (GPU) that executes machine readable instructions to generate or collect employment data. The account server 112 is any type of computing device that can receive employment data (e.g., from an employment data server 106), determine earned income of a user based on employment data, adjust the draw limit of the user account 104, manage withdrawals and deposits to the accounts 102, 104 of the system 100, or the like.

The account server 112 can include a CPU or GPU or other computing resource that executes machine readable instructions to determine user earned income, process withdrawals or deposits, and/or update the draw limit of the user account 104. The employment data server 106 and/or account server 112 can be in a single device such as a server, desktop computer, laptop, and/or personal user device like a phone. The employment data server 106 and/or account server 112 can also be distributed across more than one device, such as servers connected in a server system, or servers connected via the network 108 such as the internet, a cell phone network, virtual private network or other network. In some implementations, one or more functions of the employment data server 106 may be performed by the account server 112 and vice versa, and/or on one or more computing resources in communication with the various servers. In some implementations, some functions of the system 100 can be integrated into employer software or systems.

In one example, the employment data server 106 coordinates the collection or access of employment data, which may be transmitted or otherwise accessed by the account server 112. The account server 112 may determine a user's earned income and adjusts the draw limit of the user account 104 correspondingly. In some examples, when the draw limit is updated, threshold information about the draw limit is transferred to the user account 104. The system may be configured to limit further withdrawals from the user banking account 114 based on the threshold information transferred to the user account 104. For example, when the user attempts to institute a transaction, such as a withdrawal or payment request, the user account 104 will analyze the draw limit to determine whether the value has been exceeded by the request and, if so, may deny the request. In some examples, the employment data may be publicly available. For example, the employment data server 106 may have a public-facing interface that enables the account server 112 to receive employment data without the involvement of an employer. Data transfers between the employment data server 106, the account server 112, employer human resource systems, and/or the user device 110 may improve operation of the system 100, for example by allowing transactions to occur more rapidly, to more accurately determine a draw limit, to improve security (e.g., by reducing the risks of fraud associated with unscrupulous lenders), and/or allow users to more quickly access funds related to their work without needing to wait for a paycheck. In some implementations, a human resources system may include a computer system such as a database or the like that manages employee onboarding, payroll, performance reviews, promotions, benefits, termination. In some examples, a user device may transmit data being directly to the account server 112 and/or to the employment data server 106.

The network 116 defines one or more communication mechanisms for the components of the dynamic account system 100 to allow them to communicate with another and/or with devices outside the dynamic account system 100 through a network 108. The network 108 may be a cellular, satellite, or other wireless network (Wi-Fi, WiMAX, Bluetooth, NFC) or a wired network (Ethernet), or a combination thereof.

Generally, there may be one or more user devices 110 that interact with the dynamic account system 100 via the network 108. In many implementations, the dynamic account system 100 may include multiple user devices 110, allowing individual people to interact separately with the dynamic account system 100 via separate user devices 110. The user device 110 is any type of computing device that can transmit and receive data from another computing device. For example, the user device 110 may be a smartphone, tablet computer, wearable device, laptop, desktop, server, and the like. The user device 110 may be used to retrieve and/or display information related to the system 100, as well as to instruct the transfer of funds between accounts of the system 100, withdraw funds, and/or deposit funds.

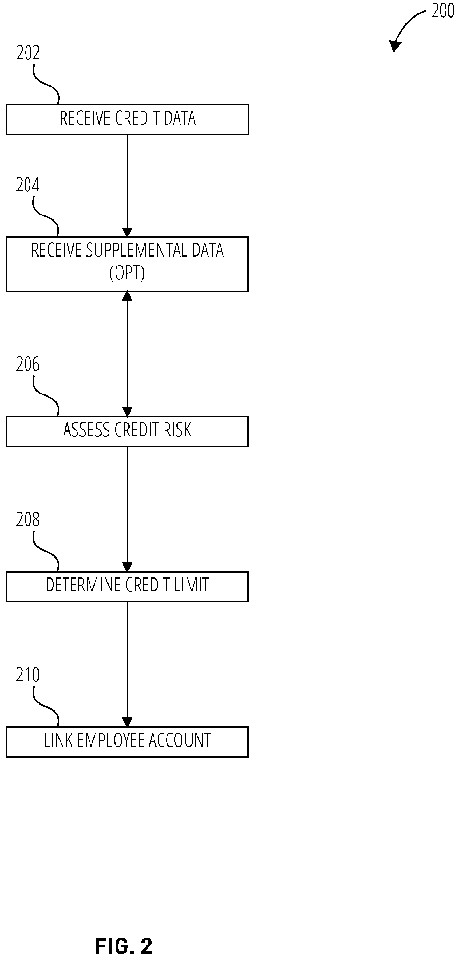

FIG. 2 illustrates an example of a method 200 of configuring the user account 104 for use with the dynamic account system 100. The operations of the method 200 may be executed in an order other than as shown and some operations may be executed in parallel with one another. Some operations may be optional.

The method 200 may begin in operation 202 and the dynamic account system 100 receives credit data related to the user. The credit data may include a user's historical earnings (e.g., wages, tips (gratuities), salary, profit sharing, bonuses, referrals, and/or commissions on sales) at their current job, a length of time at the current job, average length of time at a job, how frequently the user has moved from job to job, and other data indicative of a user's creditworthiness.

The method 200 may proceed to operation 204 and the dynamic account system 100 receives supplemental data related to the credit worthiness of the user. In some implementations, the operation 204 is optional. The supplemental data may include data related to the social interactions of the user (i.e., social graph data). Supplemental data may be scraped from a public post of a social media application, received as part of a data sharing agreement, or the like. For example, the user may opt in to data sharing between the system and the user's social media accounts. The data may be transferred to the system via an API. The supplemental data may relate to the confidence that the user is a real person and how well the user is integrated into a community. The supplemental data may relate to a time of day the user signs up for an account. For example, signups late at night may be correlated to a higher risk of the user. The supplemental data may be used to verify the identity of a user. For example, the supplemental data may be used to verify that a person is not a bot or a fake identity. The supplemental data may include risk flags such as how long a user has lived in his or her current city. For example, a user who has just moved to a new city and may not yet have an established support network may be a higher credit risk. Supplemental data may include data related to how often the user eats at restaurants, parties, vacations, and/or the user's spending history.

The method 200 may proceed to the operation 206 and the dynamic account system 100 determines the user's credit risk based on the credit data received in operation 202 and optionally the supplemental data received in operation 204. The method 200 may evaluate and analyze the data based on algorithms or machine learning models to determine the user's credit risk. For example, if a first user has a stable and increasing earning and stable employment history, that first user's credit risk may be lower than a second user who has had many jobs over a short time, or has seen decreasing earnings, that second user's credit risk may be higher than that of the first user. In some examples, the credit data and/or supplemental data factors may be more or less heavily weighted relative to one another to determine the user's credit risk. Over time, the relative weights of credit and/or supplemental data factors may be adjusted, such as to better assess a user's credit risk, to improve performance of the system overtime. Using and analyzing data corresponding to credit risk factors and/or income-related factors to assess credit risk may be more accurate and responsive to changes in a user's actual credit risk than using traditional lagging indicators such as liabilities or debts. For example, if a user loses a job, the credit risk may be updated as soon as the user misses a single work shift and/or has a status change (e.g., from "employed" to "terminated") in an employer's human resources system. Using a traditional lagging indicator and systems (e.g., a missed mortgage payment), the user's credit risk may not be updated until well after the user has taken on additional liabilities that the user cannot pay back. Thus, the systems and methods of the present disclosure may reduce risk for lenders compared to traditional systems, while enabling access or cutting off access to funds in real time or faster intervals than conventional systems.

In some implementations, a user's credit risk may be assessed by an artificial intelligence or machine learning algorithm. For example, an artificial intelligence classifier may be trained on training data including example credit data and/or supplemental data, and a user's credit risk. In some examples, the training dataset correlates a relationship between the draw limit and the employment data. Once trained, the classifier may then compare a user's data received in operation 202 and/or operation 204 and classify the user into a credit risk category. The artificial intelligence of machine learning algorithm can be used to more accurately and/or quickly predict and update (e.g., in real time) a user's credit risk without relying on debt or liabilities, which can be lagging indicators of a user's credit risk.

In some implementations, a user's credit risk may be determined by a regression model, such as a credit regression model. For example, a credit regression may receive as inputs one or more predictors related to a user's ability to repay debt, such as bankruptcy, age of oldest credit account, other credit limits, late or missed payments, income, etc. and output a credit risk score. The regression model may be applied to the individual user to determine the user's credits risk. For example, a user's personal data may be compared by the regression model to data for similar users to determine the user's credit risk.

The method 200 may proceed to the operation 208 and a user's credit limit 404 is determined. A user's credit limit may be inversely related to the user's credit risk. For example, a less risky user may have a higher credit limit 404 than a more risky user. As with operation 206 a machine learning or artificial intelligence algorithm may be used in operation 208 to assign a credit limit 404 to a user based on the credit risk determined in operation 206. The initial assessment of a user's credit limit 404 may be updated over time. For example, if the user receives a raise or a new job that pays more money, the user's credit limit 404 may be increased. Likewise, if the user becomes unemployed or demoted, the user's credit limit 404 may be decreased.

The method 200 may proceed to operation 210 and the user account 104 is linked to the employment data server 106 and the employer account 102. For example, the user account 104 may be linked to the employer account 102 to send direct deposit payments from the employer account 102 to the user account 104. In another example, the employment data server 106 may be linked to the user account 104 to enable the dynamic adjustment of the draw limit 402 of the user account 104, as discussed in further detail with respect to the method 300.

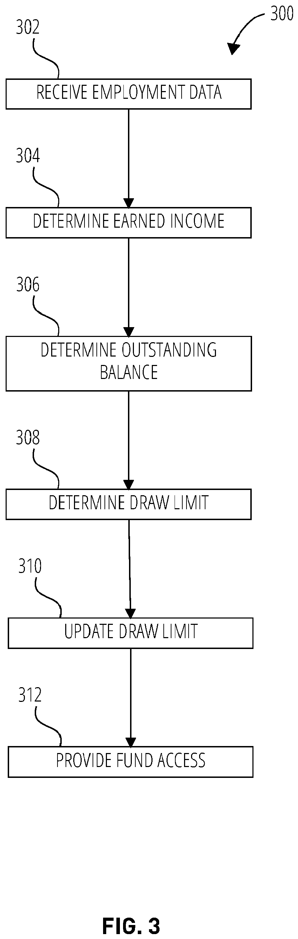

FIG. 3 illustrates an example of a method 300 of dynamically updating the draw limit 402 of the user account 104. The operations of the method 300 may be executed in an order other than as shown and some operations may be executed in parallel with one another. Some operations may be optional.

The method 300 may begin in operation 302 and the dynamic account system 100 receives employment data. In some implementations, the employment data is transmitted to the dynamic account system via an API. For example, the system 100 may receive employment data from an employer human resource management system. In some examples, the system 100 may receive data by manual input of the data into the system 100. The employment data may include any information related to earned income of the user. In various examples, the employment data includes payroll data, user status, time and attendance data, point of sale data, location data, social graph data, housing data, receipt data, profit and loss data, or the like. In some examples, supplemental data, such as determined in operation 204 may be used as employment data as described above.

The employment data may be determined by electronic communication between an computing system associated with the employer, e.g., an employer's human resource management system, timekeeping system, ledger accounting system, or the like. For example, an employer's computer system (e.g., a human resource management system) may include an application program interface ("API") that communicates with, and/or translates data for, the employment data server 106 (either directly or via the network 108) to provide employment data. For example, the employer's computer system may indicate that a user is present for a shift of work, that a user has clocked in, that a user has completed a timesheet, or that a user has otherwise earned income.

Employment data may include location data. The location data may include geolocation data indicative of a presence of a user at an employment location. For example, location data may be associated with the user. The location data may be compared to a place of business for the employer. If the employee location data is within a distance threshold of the employer's place of business, the employment data server 106 may infer that the employee is working and thus earning income. The location data may be determined by a location tracking feature of a user device 110, such as a global positioning function, cellular network triangulation, Wi-Fi location, and/or other similar methods of locating a user. In some examples, such as when a user has a job that involves different job sites, such as a construction user, delivery driver, bus operator, or the like, the location data may indicate that the user is at a job (e.g., construction) site, moving along a delivery route, moving with an identified movement pattern associated with earning income (e.g., for a food delivery driver, short stops at restaurants and then at residential addresses), or the like. In some examples, the location data may be based on a user's location relative to a virtual boundary such as a geofence. For example, a geofence may be placed virtually around an employer's place of business.

The method 300 may proceed to operation 304 and the dynamic account system 100 determines the user's earned income based on the employment data. For example, if a user clocks in for a shift with an employer's timekeeping system, the dynamic account system 100 may determine that the user is earning income. The user's hourly rate multiplied by the number of hours worked may determine the user's income earned in a particular period. For example, an elapsed time may be calculated between when a user clocks in and then clocks out. The elapsed time may be multiplied by the user's wage and an earned income determined. Similarly, location data that correlates the user's position to that of the employer may be used to determine an earned income based on a rate and time present at the workplace.

In an example of a salary user, earned income may be determined based on a day elapsing while the user's status in an employer human resources management system is "employed" or the like. Similarly, in the example of users who rely heavily on tips (e.g., restaurant users), the employer may determine daily tips paid to the restaurant (e.g., at the end of a shift or close of business) and may distribute the tips among the users at the restaurant. Such distributed tips may be communicated to the dynamic account system 100 to determine earned income for the users at the restaurant. In some examples, when a user crosses a geofence or moves in a pattern consistent with work, the dynamic account system 100 may determine that the user is earning income.

The method 300 may proceed to operation 306 and the dynamic account system 100 determines an outstanding balance 406 of the credit line. In some examples, such as when a user account 104 is first used, the operation 306 may be optional. The outstanding balance 406 may be the accumulated amount of any credit line withdrawals that the user has previously taken that have not yet been repaid. The user may pay back withdrawn credit line funds to decrease the outstanding balance 406. For example, the system 100 may identifies an entry in the ledger of the user account 104 indicative of a deposit of earned income to the account and reduce a ledger entry indicative of an outstanding draw balance of the account by an amount of at least a portion of the deposited income.

The method 300 may proceed to operation 308 and the dynamic account system 100 determines the draw limit 402or threshold of the user account 104 based on the earned income. In some embodiments, the draw limit is based on a percentage of the earned income determined in operation 304. In some embodiments, the draw limit may be based on a fixed percentage the earned income. In some embodiments, the draw limit 402 is based on a revenue of the user. The draw limit 402 may be reduced by an outstanding balance 406 such as determined in operation 306. The draw limit 402 may be updated before a user receives payment for the work performed. The draw limit 402 may be updated (e.g., increased) as the employee accrues earned income. For example, when the employee clocks in for a shift, the draw limit may be dynamically updated as the user remains clocked in. In another example, the draw limit may be updated based on an elapsed time between when the user clocked in and then clocked back out (e.g., for a break or at the end of a shift). In some examples, an employer may determine the percentage of the earned income that the draw limit 402 is based on.

The method 300 may proceed to operation 310 and the dynamic account system 100 updates the draw limit 402. For example, the draw limit 402 of the user account 104 may be increased to reflect the draw limit 402 determined in operation 308. Thus, the user may be able to withdraw funds from the user account 104 including the user's own money as well as credit line funds up to the draw limit 402. An advantage of the systems and methods of the present disclosure, may be the ability of the user to access the value of their work much sooner compared to traditional models. For example, the user may access credit line funds based on earned income before receiving a payment of that earned income.

The method 300 may proceed to operation 312 and the system 100 provides access to funds. Optionally, the operation 312 may transfer data corresponding to a release of funds, such as between a user account 104 and a user banking account 114. For example, the system 100 may transmit data to the financial institution holding the user banking account 114 and cause the user banking account to release the funds. The system 100 may receive a user request to withdraw funds from the user account 104. Responsive to the withdraw request, the system 100 may confirm that the requested funds do not exceed the draw limit. The system 100 may allow the user to withdraw funds up to the draw limit. The system 100 may update a ledger entry associated with the user account 104 indicating that the user account 104 has an updated draw limit. The user may then be able to withdraw or use funds up to the draw limit. For example, the user may be able to make purchases with the user account online or at a physical business, withdraw cash at an ATM, transfer funds to another account (e.g., a third party account), transfer the funds to a debit credential such as a debit card or virtual debit instrument, or the like using the funds of the credit line, up to the new draw limit. The system 100 may update the ledger to indicate the amount of funds withdrawn.

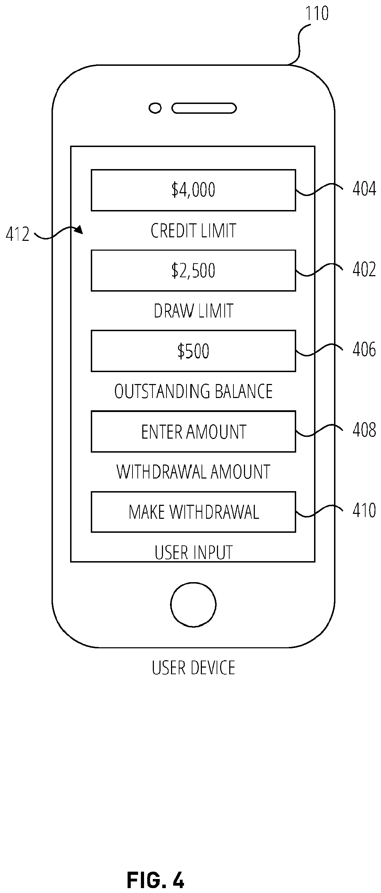

FIG. 4 illustrates an example of a graphical user interface 412 as may be used by the dynamic account system 100. The user interface 412 may be used on a user device 110 or another computing device. The user interface 412 may display the user's credit limit 404, the draw limit 402, and/or the outstanding balance 406. The user interface 412 may have one or more inputs that enable a user to input an amount they wish to withdraw of their own funds and/or funds from the credit line associated with the user account 104. For example, the withdrawal amount 408 maybe an input box, picker, dial, or other element that allows a user to select or input an amount of a withdrawal, and/or the source of the funds. The user interface 412 may include a user input 410, such as a soft button or physical button that allows a user to execute a withdrawal command. The withdrawn funds may be used as legal tender by the user. For example, the withdrawn funds may be paid to the user as cash (e.g., via an ATM), may be paid to a third party (e.g., a creditor of the user), may be moved to another account, etc.

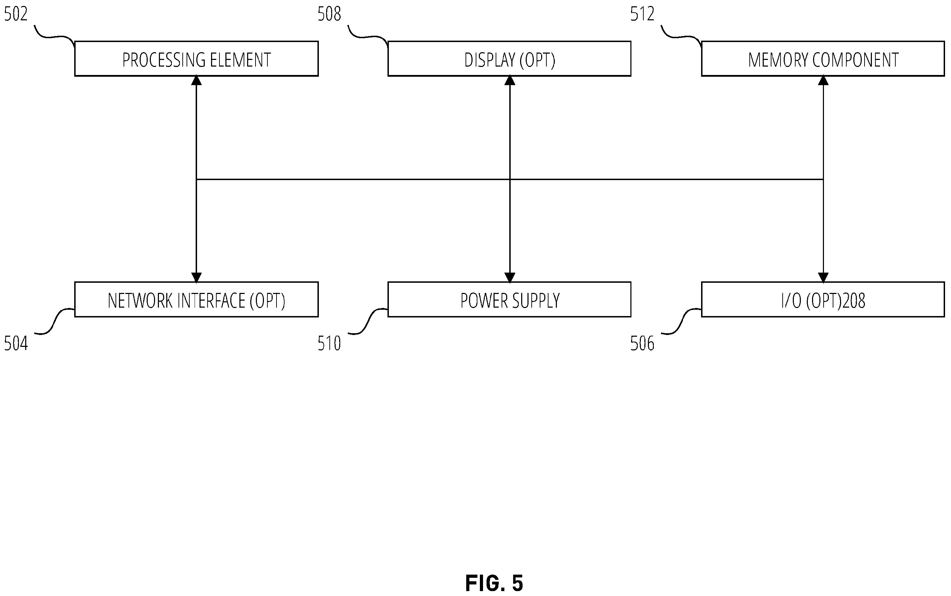

FIG. 5 illustrates a simplified block diagram for the various devices of the dynamic account system 100 including the employment data server 106, account server 112, and/or the user device 110. As shown, the various devices may include one or more processing elements 502, an optional display 508, one or more memory components 512, a network interface 504, optional power supply 510, and an optional input/output (I/O) interface 506, where the various components may be in direct or indirect communication with one another, such as via one or more system buses, contract traces, wiring, or via wireless mechanisms.

The one or more processing elements 502 may be substantially any electronic device capable of processing, receiving, and/or transmitting instructions. For example, the processing elements 502 may be a microprocessor, microcomputer, graphics processing unit, or the like. It also should be noted that the processing elements 502 may include one or more processing elements or modules that may or may not be in communication with one another. For example, a first processing element may control a first set of components of the computing device and a second processing element may control a second set of components of the computing device where the first and second processing elements may or may not be in communication with each other. Relatedly, the processing elements may be configured to execute one or more instructions in parallel locally, and/or across the network 108, such as through cloud computing resources. One or more processing elements 502, such as a tensor processing unit, may be a device adapted to execute an artificial intelligence algorithm ("AI"), machine learning algorithm, or the like such as an artificial neural network ("ANN"). Performing AI calculations on the processing element 502 specially adapted for such calculations may have certain benefits over performing such calculations on a general purpose computing device such as a server. For example, by performing calculations on dedicated hardware may be faster, more scalable, or reliable compared to a general purpose computer. In some implementations the tensor processing unit may be an edge device that performs calculations locally. Results of AI calculations may be more quickly available when performed locally. However, in some embodiments, AI or other calculations may be executed by a processing element 502 in a server.

The display 508 is optional and provides an input/output mechanism for devices of the dynamic account system 100, such as to display visual information (e.g., images, graphical user interfaces, videos, notifications, and the like) to a user, and in certain instances may also act to receive user input (e.g., via a touch screen or the like). The display may be an LCD screen, plasma screen, LED screen, an organic LED screen, or the like. The type and number of displays may vary with the type of devices (e.g., smartphone versus a desktop computer).

The memory components 512 store electronic data that may be utilized by the computing devices, such as account balances, earned income, draw limits, credit limits, audio files, video files, document files, programming instructions, and the like. The memory components 512 may be, for example, non-volatile storage, a magnetic storage medium, optical storage medium, magneto-optical storage medium, read only memory, random access memory, erasable programmable memory, flash memory, or a combination of one or more types of memory components. In many embodiments, the employment data server 106 may have a larger memory capacity than the user device 110, with the memory components optionally linked via the network 108 or the like.

The network interface 504 receives and transmits data to and from the network 108 to the various devices of the dynamic account system 100. The network/communication user interface 412 may transmit and send data to the network 116 directly or indirectly. For example, the networking/communication interface may transmit data to and from other computing devices through the network 108. In some embodiments, the network interface may also include various modules, such as an API that interfaces and translates requests across the network 108 to employment data server 106 or user device 110.

The various devices of the system may also include a power supply 510. The power supply 510 provides power to various components of the user device 110 or the employment data server 106. The power supply 510 may include one or more rechargeable, disposable, or hardwire sources, e.g., batteries, power cord, AC/DC inverter, DC/DC converter, or the like. Additionally, the power supply 510 may include one or more types of connectors or components that provide different types of power to the user device 110 and/or employment data server 106. In some embodiments, the power supply 510 may include a connector (such as a universal serial bus) that provides power to the computer or batteries within the computer and also transmits data to and from the device to other devices.

The I/O interface 506 allows the system devices to receive input from a user and provide output to a user. In some devices, for instance the user device 110, the I/O interface may be optional. For example, the I/O interface 506 may include a capacitive touch screen, keyboard, mouse, stylus, or the like. The type of devices that interact via the input/output interface 140 may be varied as desired.

The methods and systems of the present disclosure have a number of advantages over existing payment systems. In one existing payment system, the user assigns their wages to a third party who deducts an outstanding loan balance, if any, from the user's paycheck and the balance of the paycheck is remitted to the user. At least one problem with this system is that it requires the involvement of the employer, making the system difficult to scale. Furthermore, a user may not wish to share with the employer the fact the employer is using a payday loan product. By using the systems and method of the present disclosure, the employer may not be involved (e.g., employment data may be determined from public sources without the need of the employer's involvement). Additionally, the user does not need to assign their wages to a third party who may or may not be trustworthy. Furthermore, the user can attain additional payment flexibility without the knowledge of their employer.

In another existing payment system, the user is paid to an account held by a third party for the benefit of the user. In other words, while the user may retain equitable title to the account, legal title is held by the third party. This system again has several deficiencies overcome by the systems and methods of the present disclosure. For example, using the systems and methods of the present disclosure, the user does not need to agree to receive their income in an account they do not legally own, and the employer does not need to agree to pay the user's income to such an account. The systems and methods of the present disclosure are more transparent than this existing system and do not require a high degree of trust of a third party legal owner of an account to actually pay any balance of income to the user and not to charge hidden fees.

In another existing payment system, a user may write a check to a lender for an amount the user wishes to borrow, plus any fee. The lender gives the user the borrowed amount (or directly deposits the amount in the user's checking account). The lender usually holds the check until the user's next payday and then cashes the check for the loan amount plus fee. The systems and methods of the present disclosure are beneficial over this existing system at least because the disclosed systems scale well and do not rely on the use of paper checks.

The description of certain embodiments included herein is merely exemplary in nature and is in no way intended to limit the scope of the disclosure or its applications or uses. In the included detailed description of embodiments of the present systems and methods, reference is made to the accompanying drawings which form a part hereof, and which are shown by way of illustration specific to embodiments in which the described systems and methods may be practiced. These embodiments are described in sufficient detail to enable those skilled in the art to practice presently disclosed systems and methods, and it is to be understood that other embodiments may be utilized, and that structural and logical changes may be made without departing from the spirit and scope of the disclosure. Moreover, for the purpose of clarity, detailed descriptions of certain features will not be discussed when they would be apparent to those with skill in the art so as not to obscure the description of embodiments of the disclosure. The included detailed description is therefore not to be taken in a limiting sense, and the scope of the disclosure is defined only by the appended claims.

From the foregoing it will be appreciated that, although specific embodiments of the invention have been described herein for purposes of illustration, various modifications may be made without deviating from the spirit and scope of the invention.

The particulars shown herein are by way of example and for purposes of illustrative discussion of the preferred embodiments of the present invention only and are presented in the cause of providing what is believed to be the most useful and readily understood description of the principles and conceptual aspects of various embodiments of the invention. In this regard, no attempt is made to show structural details of the invention in more detail than is necessary for the fundamental understanding of the invention, the description taken with the drawings and/or examples making apparent to those skilled in the art how the several forms of the invention may be embodied in practice.

As used herein and unless otherwise indicated, the terms "a" and "an" are taken to mean "one", "at least one" or "one or more". Unless otherwise required by context, singular terms used herein shall include pluralities and plural terms shall include the singular.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

Of course, it is to be appreciated that any one of the examples, embodiments or processes described herein may be combined with one or more other examples, embodiments and/or processes or be separated and/or performed amongst separate devices or device portions in accordance with the present systems, devices and methods.

Finally, the above discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art without departing from the broader and intended spirit and scope of the present system as set forth in the claims that follow. Accordingly, the specification and drawings are to be regarded in an illustrative manner and are not intended to limit the scope of the appended claims.

Aspects and features of the present disclosure are set out in the following numbered clauses.
1. A computer based method for determining dynamic funds available and providing electronic access to the funds comprising:
   determining, with a processing element, employment data based to the work of a user;
   determining, with the processing element, an earned income based on the employment data;
   determining, with the processing element, a draw limit of an account configured to receive the earned income, wherein the draw limit is determined during an interval before a payment to the
      account;
   dynamically updating, with the processing element, the draw limit based on the earned income;
      and
   transmitting for display on a user device a user interface identifying the draw limit and funds available.
2. The method of clause 1, further comprising determining a credit limit, wherein the draw limit is not greater than the credit limit.
3. The method of clause 1, wherein the account is configured to allow a withdraw up to the draw limit.
4. The method of clause 1, wherein the processing element identifies an account number associated with a debit credential and updates a ledger associated with the account to link the account to a debit credential operative to enable the withdrawal.
5. The method of clause 1, wherein the processing element identifies an entry in the ledger indicative of a deposit of the earned income to the account, reduces a ledger entry indicative of an outstanding draw balance of the account by an amount of at least a portion of the deposited income, and displays an updated outstanding draw balance.
6. The method of clause 2, wherein the credit limit or the draw limit is based, at least in part, on social data of a user associated with the account.
7. The method of clause 1, wherein the draw limit is a percentage of the earned income.
8. The method of clause 1, wherein the draw limit is based on at least one of time and attendance data, geolocation data of the user, employment history, housing data, receipt data, profit and loss data, or a user status.
9. The method of clause 8, wherein the processing element receives geolocation data of the user and tracks a presence of the user at a place of business of an employer over a period of time and determines the earned income based on the period of time the user is present at the place of business.
10. The method of clause 8, wherein the time and attendance data includes timesheet data related to a work shift of the user.
11. The method of clause 1, wherein the employment data is received from an employer human resources management system via an application program interface that translates the employment data between the human resources system and the processing element.
12. The method of clause 1, wherein the draw limit is determined by a machine learning algorithm executed by the processing element and trained on a dataset that correlates a relationship between the draw limit and the employment data.
13. The method of clause 1, wherein the draw limit is based on geolocation data indicative of a presence of a user at an employment location.
14. The method of clause 1, wherein the earned income includes one of salary, wages, or a gratuity.
15. The method of clause 1, wherein the user has legal and equitable title to the account.
16. The method of clause 1, wherein the draw limit is based on a revenue of the user.
17. The method of clause 1, wherein the employment data is related to a work input.
18. The method of clause 1 further comprising, receiving from the user device, by the processing element, access instructions to, access to the funds, wherein an amount of the funds up to the draw limit may be withdrawn from the account.
19. A system for providing electronic access to funds comprising:
   a server hosting a user account configured to record one or more ledger entries, wherein a first ledger entry is indicative of an earned income and second ledger entry is indicative of a draw
      limit; and
   a processing element operative to adjust the ledger entries of the user account, wherein the processing element:
      receives employment data related the user;
      determines the earned income based on the employment data;
      determines a draw limit of the user account, wherein the draw limit is determined during an interval before a payment to the user account; and
      dynamically updates the draw limit based on the earned income.
20. The system of clause 19, wherein the draw limit is based on at least one of time and attendance data, geolocation data of the user, employment history, housing data, receipt data, profit and loss data, or a user status.
21. The system of clause 19, wherein the draw limit is determined by a machine learning algorithm trained on a dataset that correlates a relationship between the draw limit and the employment data.
22. The system of clause 19, wherein the draw limit is based on geolocation data indicative of a presence of a user at an employment location.
23. A computer readable media storing instructions that when executed by a processing element cause the processing element to perform the following functions:
   receive employment data related to work of a user from at least one of a user device or an employer device;
   determine an earned income for a user over a period of time based on the employment data;
   determine an outstanding balance of a credit line associated with a user account associated with the user;
   update a draw limit of the credit line based on the outstanding balance and the earned income for the period of time;
   transmit an updated draw limit to a user device for display.
24. The computer readable media of clause 23, wherein the instructions when executed by the
   processing element cause the processing element to:
      responsive to a user request to withdraw requested funds from the account, confirm that the requested funds do not exceed the draw limit;
      provide access to funds of the credit line up to the draw limit;
      responsive to the user withdrawing the requested funds, update the ledger to indicate that the requested funds have been withdrawn as withdrawn funds.
25. The computer readable media of clause 24, wherein the instructions when executed by the processing element cause the processing element to transfer the withdrawn funds to a debit credential.
26. The computer readable media of clause 25, wherein the debit credential is one of a physical debit card or a virtual debit instrument.
27. The computer readable media of clause 24, wherein the withdrawn funds are transferred to a third-party account.
28. A method of providing access to funds comprising:
   determining by a processing element a value of earned wages for a user over a period of time; and
   generating a funds value to be distributed to the user based on the value of earned wages for the period of time.
29. The method of clause 28, further comprising initiating an electronic transfer of funds corresponding to the funds value from a first account to a second account associated with the user.
30. A system configured to perform the method of any preceding clause.
31. A computer-readable medium comprising instructions which, when executed by a processing element of a computing device, cause the computing device to perform the method of any preceding clause.

Further aspects and features of the present disclosure are set out in the following numbered items.
1. A computer based method for generating data for a dynamic credit instrument comprising:
   determining, with a processing element, employment data based on work of a user;
      determining, with the processing element, an earned income based on the employment data;
   determining, with the processing element, a draw limit of an account configured to receive the earned income, wherein the draw limit is determined during an interval before a payment to the account for the earned income by an employer;
      dynamically updating, with the processing element, the draw limit based on the earned income;
   dynamically determining with the processing element, based on a difference between the draw limit and an outstanding draw balance from the account, an amount of funds available;
   generating, with the processing element, the dynamic credit instrument, wherein the dynamic credit instrument includes data used to regulate access to the dynamic credit instrument; and
   transmitting for display on a user device a user interface identifying the draw limit and the amount of funds available.
2. The computer based method of item 1, further comprising determining a credit limit, wherein the draw limit is not greater than the credit limit.
3. The computer based method of item 1, wherein the account is configured to allow a withdrawal, using the dynamic credit instrument, up to the draw limit.
4. The computer based method of item 3, wherein the processing element identifies an account number associated with the dynamic credit instrument and updates a ledger associated with the account to link the account to the dynamic credit instrument operative to enable the withdrawal.
5. The computer based method of item 1, wherein the processing element:
   identifies an entry in the ledger indicative of a deposit of the earned income to the account;
   reduces a ledger entry indicative of the outstanding draw balance of the account by an amount of at least a portion of the deposited earned income;
   updates the dynamic credit instrument to include an updated outstanding draw balance;
      and
   displays the updated outstanding draw balance.
6. The computer based method of item 2, wherein the credit limit or the draw limit is based, at least in part, on social data of a user associated with the account.
7. The computer based method of item 1, wherein the draw limit is a percentage of the earned income.
8. The computer based method of item 1, further comprising:
   detecting, with a sensor, employment data including at least one of time and attendance data, geolocation data of the user, employment history, housing data, receipt data, profit and loss data, or a user status;
   receiving, with the processing element, the employment data from the physical sensor;
      and
   determining the draw limit based on the employment data..
9. The computer based method of item 8, wherein the processing element:
   receives geolocation data of the user from the physical sensor;
   tracks a presence of the user at a place of business of an employer over a period of time;
      and
   determines the earned income based on the period of time the user is present at the place of business.
10. The computer based method of item 8, wherein the time and attendance data includes timesheet data related to a work shift of the user.
11. The computer based method of item 1, wherein the employment data is received by the processing element from an employer human resources management system via an application program interface that translates the employment data between the human resources system and the processing element.
12. The computer based method of item 1, wherein the draw limit is determined by a machine learning algorithm executed by the processing element and trained on a dataset that correlates a relationship between the draw limit and the employment data.
13. The computer based method of item 1, wherein the draw limit is based on geolocation data indicative of a presence of a user at an employment location.
14. The computer based method of item 1, wherein the earned income includes one of salary, wages, or a gratuity.
15. The computer based method of item 1, wherein the user has legal and equitable title to the account.
16. The computer based method of item 1, wherein the draw limit is based on a revenue of the user.
17. The computer based method of item 1, wherein the employment data is related to a work input.
18. The computer based method of item 1 further comprising, receiving from the user device, by the processing element, access instructions to, access to the funds, wherein an amount of the funds up to the draw limit may be withdrawn from the account.
19. A system for generating a dynamic credit instrument comprising:
   a server hosting a user account configured to record one or more ledger entries, wherein a first ledger entry is indicative of an earned income and second ledger entry is indicative of a draw limit; and
   a processing element operative to adjust the ledger entries of the user account, wherein the processing element:
      receives from a server employment data related the user;
      determines the earned income based on the employment data;
      determines a draw limit of the user account, wherein the draw limit is determined during an interval before a payment to the user account;
      generates the dynamic credit instrument, wherein the dynamic credit instrument includes the draw limit;
         dynamically updates the dynamic credit instrument with the draw limit based on the earned income; and
         presenting on a display screen, account information corresponding to the user account,
      wherein the account information includes a funds available based on the draw limit.
20. The system of item 19, further comprising:
   a sensor configured to detect employment data including at least one of time and attendance data, geolocation data of the user, employment history, housing data, receipt data, profit and loss data, or a user status, wherein the processing element is configured to receive the employment data from the physical sensor and update the draw limit is based on the employment data.
21. The system of item 19, wherein the draw limit is determined by a machine learning algorithm trained on a dataset that correlates a relationship between the draw limit and the employment data.
22. A system configured to perform the method of any preceding item.
23. A computer-readable medium comprising instructions which, when executed by a processing element of a computing device, cause the computing device to perform the method of any preceding item.

## Claims

1. A computer based method for generating data for a dynamic credit instrument comprising:
determining, with a processing element, employment data based on work of a user;
determining, with the processing element, an earned income based on the employment data;
determining, with the processing element, a draw limit of an account configured to receive the earned income, wherein the draw limit is determined during an interval before a payment to the account for the earned income by an employer;
dynamically updating, with the processing element, the draw limit based on the earned income;
dynamically determining with the processing element, based on a difference between the draw limit and an outstanding draw balance from the account, an amount of funds available;
generating, with the processing element, the dynamic credit instrument, wherein the dynamic credit instrument includes data used to regulate access to the dynamic credit instrument; and
transmitting, for display on a user device, a user interface identifying the draw limit and the amount of funds available.

2. The computer based method of claim 1, further comprising:
receiving, with the processing element, employment data detected with a physical sensor, wherein the employment data includes at least one of time and attendance data, geolocation data of the user, employment history, housing data, receipt data, profit and loss data, or a user status; and
determining the draw limit based on the employment data.

3. The computer based method of claim 2, wherein the processing element:
receives geolocation data of the user from the physical sensor;
tracks a presence of the user at a place of business of an employer over a period of time;
and
determines the earned income based on the period of time the user is present at the place of business.

4. The computer based method of any of claims 2 to 3, wherein the time and attendance data includes timesheet data related to a work shift of the user.

5. The computer based method of any preceding claim, wherein the employment data is received by the processing element from an employer human resources management system via an application program interface that translates the employment data between the human resources system and the processing element.

6. The computer based method of any preceding claim, wherein the draw limit is determined by a machine learning algorithm executed by the processing element and trained on a dataset that correlates a relationship between the draw limit and the employment data.

7. The computer based method of any preceding claim, wherein the draw limit is based on geolocation data indicative of a presence of a user at an employment location.

8. The computer based method of any preceding claim, further comprising determining a credit limit, wherein the draw limit is not greater than the credit limit,
optionally wherein the credit limit or the draw limit is based, at least in part, on social data of a user associated with the account.

9. The computer based method of any preceding claim, wherein the account is configured to allow a withdrawal, using the dynamic credit instrument, up to the draw limit.

10. The computer based method of claim 9, wherein the processing element identifies an account number associated with the dynamic credit instrument and updates a ledger associated with the account to link the account to the dynamic credit instrument operative to enable the withdrawal.

11. The computer based method of any preceding claim, wherein the processing element:
identifies an entry in the ledger indicative of a deposit of the earned income to the account;
reduces a ledger entry indicative of the outstanding draw balance of the account by an amount of at least a portion of the deposited earned income;
updates the dynamic credit instrument to include an updated outstanding draw balance;
and
displays the updated outstanding draw balance.

12. The computer based method of any preceding claim, wherein at least one of:
the draw limit is a percentage of the earned income;
the earned income includes at least one of salary, wages, or a gratuity;
the user has legal and equitable title to the account;
the draw limit is based on a revenue of the user; or
the employment data is related to a work input.

13. The computer based method of any preceding claim, further comprising, receiving from the user device, by the processing element, access instructions to access the funds, wherein an amount of the funds up to the draw limit may be withdrawn from the account.

14. A computer-readable medium comprising instructions which, when executed by a processing element of a computing device, cause the computing device to perform the method of any preceding claim.

15. A system for generating a dynamic credit instrument comprising:
a server hosting a user account configured to record one or more ledger entries, wherein a first ledger entry is indicative of an earned income and second ledger entry is indicative of a draw limit; and
a processing element operative to adjust the ledger entries of the user account, wherein the processing element is configured to:
receive from a server employment data related the user;
determine the earned income based on the employment data;
determine a draw limit of the user account, wherein the draw limit is determined during an interval before a payment to the user account;
generate the dynamic credit instrument, wherein the dynamic credit instrument includes the draw limit;
dynamically update the dynamic credit instrument with the draw limit based on the earned income; and
present on a display screen, account information corresponding to the user account, wherein the account information includes a funds available based on the draw limit.
